# EUROPEAN PATENT APPLICATION

(11) **EP 2 133 484 A1**
(43) Date of publication of application: **16.12.2009**
(21) Application number: 08700668.0
(22) Date of filing: 17.01.2008
(51) Int. Cl.: E04C 1/40, C04B 41/82

(54) **COMPOSITE CERAMIC TILE AND METHOD FOR PREPARING IT**

(30) Priority: 02.02.2007 CN 200710026697
(71) Applicant: Feng, Jiansheng, Guangdong 510080 (CN)
(72) Inventor: Feng, Jiansheng, Guangdong 510080 (CN)
(74) Representative: Hryszkiewicz, Danuta
(86) International application number: PCT/CN2008/000119
(87) International publication number: WO 2008/095401

(57) **Abstract**

A composite ceramic tile and method for preparing the same are disclosed. The composite ceramic tile comprises of a ceramic tile and organic coating thereon, wherein the coating contains at least one of aluminum powder pigment and/or at least one of mica-titanium pearlescent pigment. The method comprises steps of (1) selecting a ceramic tile; (2) applying paint onto the tile at least one time, wherein the paint contains pigment of at least one of aluminum powder pigment and/or at least one of mica-titanium pearlescent pigment; and (3) drying the liquid paint, or melting-cooling or melting-solidifying the powder paint. The tile shows gloss of metal or pearl, and can be used as decorative material.

## Description

The invention relates to a tile and a method for producing the same, and more particularly to a synthetic ceramic tile and a method for producing the same.

Nowadays, synthetic ceramic tiles are widely used in architecture. In order to improve aesthetic effect of the synthetic ceramic tiles, different methods such as glazing and bleeding are used to make the synthetic ceramic tiles more colorful. However, there are several problems with these methods: decorative effect thereof is poor, and metallic coating or pearlescent lacquer that features good effect cannot be coated on conventional synthetic ceramic tiles.

In view of the above-described problem, it is one objective of the invention to provide a synthetic ceramic tile that features good decorative effect and has a metallic or pearl color.

It is another objective of the invention to provide a method for producing a synthetic ceramic tile that features good decorative effect and has a metallic or pearl color.

To achieve the above objectives, in accordance with one embodiment of the invention, provided is a synthetic ceramic tile, comprising a ceramic tile and a film layer, wherein the film layer is coated on the ceramic tile, and the film layer contains at least an aluminum pigment and/or at least a titanium-mica pearlescent pigment.

In a class of this embodiment, the ceramic tile is an unglazed tile.

In a class of this embodiment, the ceramic tile is an unglazed stone tile.

In a class of this embodiment, the film layer comprises a priming coat, an intermediate coat, and a top coat.

In a class of this embodiment, the priming coat does not contain the aluminum pigment and the titanium-mica pearlescent pigment.

In a class of this embodiment, the intermediate coat contains the aluminum pigment and/or the titanium-mica pearlescent pigment.

In a class of this embodiment, the top coat contains colored varnish and/or varnish.

In a class of this embodiment, a metal colored pattern is disposed on the surface of the film layer.

In accordance with another embodiment of the invention, provided is a method for producing a synthetic ceramic tile, comprising providing a ceramic tile, coating a coating on the ceramic tile, the coating containing at least an aluminum pigment and/or at least a titanium-mica pearlescent pigment, and drying a liquid coating deposited on the ceramic tile.

In a class of this embodiment, it further comprises coating primer that does not contain an aluminum pigment and a titanium-mica pearlescent pigment on the surface of the ceramic tile before coating a coating on the ceramic tile.

In a class of this embodiment, it further comprises coating colored varnish and/or varnish on the ceramic tile after coating a coating on the ceramic tile.

In a class of this embodiment, the aluminum pigment and the titanium-mica pearlescent pigment account for 0.7 - 60% of the coating by weight.

In a class of this embodiment, the aluminum pigment or the titanium-mica pearlescent pigment account for 0.7 - 60% of the coating by weight.

In a class of this embodiment, the aluminum pigment is non-floating aluminum powder.

In accordance with a further embodiment of the invention, provided is a method for producing a synthetic ceramic tile, comprising providing a ceramic tile, coating a coating on the ceramic tile, the film layer containing at least an aluminum pigment and/or at least a titanium-mica pearlescent pigment, and melt-quenching or melt-curing a powdery coating deposited on the ceramic tile.

In a class of this embodiment, it further comprises coating primer that does not contain an aluminum pigment and a titanium-mica pearlescent pigment on the surface of the ceramic tile before coating a coating on the ceramic tile.

In a class of this embodiment, it further comprises coating colored varnish and/or varnish on the ceramic tile after coating a coating on the ceramic tile.

In a class of this embodiment, the aluminum pigment and the titanium-mica pearlescent pigment account for 0.7 - 60% of the coating by weight.

In a class of this embodiment, the aluminum pigment or the titanium-mica pearlescent pigment account for 0.7 - 60% of the coating by weight.

In a class of this embodiment, the aluminum pigment is non-floating aluminum powder.

Advantages of the invention comprise: 1) the synthetic ceramic tile has a metallic or pearl color, which improves decorative effect thereof and makes it suitable for architecture decoration; 2) the synthetic ceramic tile can have any plan shape and any size, which provides various selection for artistic expression; 3) the synthetic ceramic tile does not deform and features good fireproof and heat-resisting performance; 4) the method for producing the synthetic ceramic tile is simple and easy for industrialization.

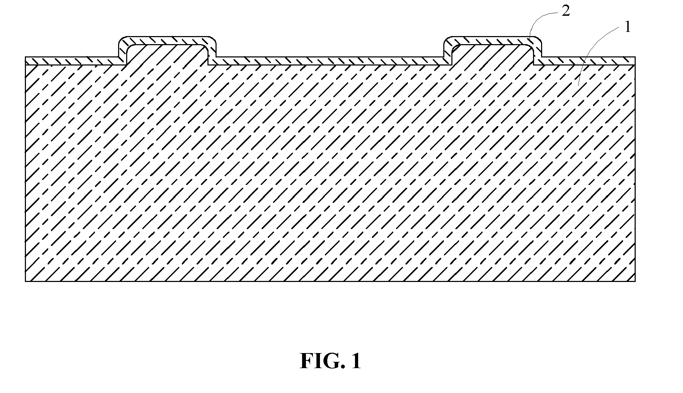

FIG. 1 is a schematic view of a synthetic ceramic tile of an exemplary embodiment of the invention.

A synthetic ceramic tile of the invention comprises a ceramic tile and a film layer. The film layer is coated on the ceramic tile, and the film layer contains at least an aluminum pigment and/or at least a titanium-mica pearlescent pigment.

In this embodiment, the ceramic tile is an unglazed tile or an unglazed stone tile.

The film layer comprises a priming coat, an intermediate coat, and a top coat. A metal colored pattern is disposed on the surface of the film layer.

The priming coat does not contain the aluminum pigment and the titanium-mica pearlescent pigment, the intermediate coat contains the aluminum pigment and/or the titanium-mica pearlescent pigment, and the top coat contains colored varnish and/or varnish.

A method for producing a synthetic ceramic tile of the invention comprises providing a ceramic tile, coating primer that does not contain an aluminum pigment and a titanium-mica pearlescent pigment on the surface of the ceramic tile, coating a coating on the ceramic tile, the coating containing at least an aluminum pigment and/or at least a titanium-mica pearlescent pigment, coating colored varnish and/or varnish on the ceramic tile, and drying a liquid coating deposited on the ceramic tile, or melt-quenching or melt-curing a powdery coating deposited on the ceramic tile.

In this embodiment, the ceramic tile is an unglazed tile, the aluminum pigment is one or more kinds of non-floating aluminum powder, and the titanium-mica pearlescent pigment is one or more of titanium-mica pearlescent powder, titanium-mica pearlescent powder covered by a nonmetal oxide covering, and titanium-mica pearlescent powder covered by a transparent organic coating.

Selection of the synthetic ceramic tile The synthetic ceramic tile of the invention is defined by the China national standard GB/T9195-1999, and made from natural minerals such as clays, feldspars, quartz and so on via processes of crushing, mixing, fine grinding, molding, drying, sintering and so on. In this embodiment, the synthetic ceramic tile can be a porcelain tile, a stoneware tile, a fine stoneware tile, a stone tile, a fine earthenware tile and so on, and preferably an unglazed stoneware tile.

Selection of coating Coatings on the market, such as metallic paint (liquid coatings containing decorative metallic pigments and normally aluminum pigments), pearlescent lacquer (liquid coatings containing pearlescent pigments and normally titanium-mica pearlescent pigments), metal-spark powdery coatings (solid coatings containing decorative metallic pigments and normally non-floating aluminum powder), pearlescent powdery coatings (solid coatings containing pearlescent pigments and normally titanium-mica pearlescent pigments) are capable of presenting metallic and pearl colors on the surface of a coated product. These coatings are respectively prepared for surfaces of steel, aluminum, aluminum alloys, plastics, woods, papers and so on, have rich color designs, and are in the form of solid powder, liquid solvents or even water. These coatings can be used to cover ceramic tiles whereby obtaining decorative films with high adhesion. However, ceramic substrates are different from substrates of steel, aluminum, aluminum alloys, plastics, woods and papers, and therefore coatings specially prepared for ceramic substrates help to improve overall benefit.

The coating of the invention is made from resins and polymers, comprising but not limited to a natural resin, a furan resin, a coumarone resin, a petroleum resin, a xylene-formaldehyde resin, a phenolic resin, an alkyd resin, an amino resin, a cellulose ester, a cellulose ether, a vinyl resin, an acrylic resin, a polyester resin, a polycarbonate resin, an epoxy resin, a polyamide resin, an isocyanic acid resin, a silicone resin, a fluoro resin, an organo-aluminium resin, an organic borate resin, an organic titanium resin, a rubber resin, a polyimide resin, and a modified resin, a derivative or a combination thereof made for certain purposes like reducing cost of coating and/or improving processing property and/or coating property.

The coating of the invention comprises at least an aluminum pigment or a titanium-mica pearlescent pigment. The aluminum pigment is divided into aluminum powder and aluminum paste according to a floatation characteristic thereof. The aluminum powder is divided into floating aluminum powder and non-floating aluminum powder. During production of the floating aluminum powder, saturated fatty acids are used as lubricants and operate to cover the aluminum powder so that the aluminum powder is capable of floating in a coat. The floating aluminum powder always floats on an outmost side of the coat and is capable of reflecting all rays arriving at the coat so that the coat presents colors ranging from silver white to chromium.

The non-floating aluminum powder uses unsaturated fatty acids instead of saturated fatty acids to eliminate buoyancy of the aluminum powder. The aluminum powder is not directionally arranged on the surface of the coat, but arranged in the coat and parallel to surface orientation. Since the orientation is not perfect, arrays arriving at the coat can be reflected so that the coat presents a metallic color and metal-spark effect.

During processing of coating containing aluminum powder, especially powder coating, fragility thereof should be noticed, and if excessive tearing force is applied thereon, they will be degraded or buoyancy thereof will be eliminated, and decorating effect thereof will be affected. Currently some other methods other than a ball milling method, such as a rapid solidification technology, are used to produce aluminum sheets. The method comprises a melt-spinning method and a rotary drum method. In the melt-spinning method, liquid melts of arbitrarily combined metals (pure metals or alloys) are squeezed from a gap, and cooled into continuous sheets at a cooling section. Then the continuous sheets are cut into flaky, flat and fibrous and strip-shaped flakes with predetermined size. A typical flake has a thickness of 25 mm and a radius length of 500 - 2000 mm. In the rotary drum method, melted metals enter a rotary drum via a gap, and force of periphery disperses particles and generates particles in the shape of a ball, a needle and a tadpole. These methods can be applied to metals with a wide composition range to produce products with different substrates, size, shapes and colors. These products are applicable to covering films as pigments so that the pigments present metallic colors or metallic luster, and fallen into a range of aluminum pigments of the invention. The titanium-mica pearlescent pigment, namely the titanium-mica pearlescent powder, normally uses a natural muscovite flake as a core and single-layered or multiple-layered micro powder of titanium dioxide or other metallic oxides to coat the surface of the core, and is a planar sandwich structure that is capable of decomposing compound light into monochromatic light with different colors and presenting pearly luster and/or metallic luster. A pearlescent pigment with coarse particles generates a flickering metallic luster effect, and a pearlescent pigment with fine particles presents gentle silk-like pearly luster. The titanium-mica pearlescent pigment is divided into three categories according to colors of lights reflected thereby: a silver-white-type titanium-mica pearlescent pigment is coated with titanium oxides or zirconium oxides, an optical thickness of a covering film is only 220-1220 nm, a reflected light thereof is a white compound light with a silver white color; a rainbow-type titanium-mica pearlescent pigment has interference hues transferring from silver white to gold, red, purple, blue, and green with increase of a thickness of a covering film made of titanium dioxide, and a series of transition hues between two main hues; a coloring-type titanium-mica pearlescent pigment uses the silver-white-type titanium-mica pearlescent pigment or the rainbow-type titanium-mica pearlescent pigment as a core, and oxides such as iron oxide or chromium oxide, rare earth oxides, nonmetal oxides or a transparent organic pigment to cover the film. The coloring-type titanium-mica pearlescent pigment has a great variety, complete chromatography and wide supply of market. The titanium-mica pearlescent pigment is the most popular kind of pearlescent pigment in terms of supply of goods and application, and preparation method, chemical composition, macrostructure, microstructure (of the core and the covering film), and optical properties (typically a pearlescent effect, a metal-spark effect, a visual flickering effect, a color transferring effect, an additional color effect, a 3D spacial effect, a background contrast effect) are well-known by people skilled in the art. Currently, people use various methods such as a so-called "surface metallization of a pearlescent pigment" to cover the titanium-mica pearlescent pigment with nonferrous metals such as copper and chromium and noble metals such as gold, silver and platinum via wet reduction (namely chemical ion plating), vacuum evaporation, ion sputtering and so on, whereby metalizing the surface thereof and improving metal luster and covering powder. It should be noticed that other novel pearlescent pigments using mica flakes or other materials as carriers and covering the carriers with various metal or nonmetal oxides such as titanium dioxide in a form of nano-sized particles, or even pearlescent pigments without any carrier are fallen into the scope of the invention as long as the pigments have any one or more above-mentioned optical properties as being applied to a covering film.

The coating of the invention contains a film-forming material, which comprises any one or more above-mentioned resins (polymers) that can be used as coating binders, and any one or more above-mentioned pigments.

The coating of the invention may contain other pigments or dyes so that the covering film has certain color effects. To facilitate coatinging, the coating may contain solvent components. To meet requirements for coatinging and film performance, the coatinging may also contain auxiliary components. Namely, the coating of the invention does not limit other materials except for the above-mentioned resins (polymers) and pigments, although these materials totally or partially exist or do not exist in a solid coating film formed by the coating after coatinging. Using which resins (polymers) and combinations thereof, aluminum pigments and combinations thereof, combinations of the aluminum pigments and other pigments, titanium-mica pearlescent pigments or combinations thereof, or combinations of the titanium-mica pearlescent pigments and other pigments, and combinations and proportion of the resins (polymers), pigments, solvents and auxiliary agents depend on characteristics thereof, usage of composite products, and requirements for environment and colors. Possibility and availability of these combinations are well-known by those people skilled in the art.

More specifically, the synthetic ceramic tile of the invention uses a ceramic tile as a substrate, and coating is coated on the surface thereof whereby forming a coating film. The coating film features a metallic color or pearl luster, which is determined by the aluminum pigment or the titanium-mica pearlescent pigment contained in the coating and constituting necessary components of the film-forming materials. Normally, as long as the aluminum pigment or the titanium-mica pearlescent pigment accounts for 5% of the coating film by weight, whether it is used as only one pigment or combined with other pigments, the coating film presents an obvious metallic color or pearl luster. However, since the above-mentioned resins (polymers) and pigments have a great variety, and the coating film often requires different color design, content of the pigment in the coating film may be less or more. For example, when the floating aluminum powder with a high water covering capability (leafing> 14000 cm2/g) is applied to a high solid content coating and forms a thick film (a film thickness > 300 mm), only 0.7% of aluminum powder content can make the coating film have a silver white color. Take some aluminum sheets with length of 1 mm, width of 2 mm and thickness of 25 mm for example, content of the aluminum in the coating film may be greater than 60% weight account, and only little resin attached on the surface of the substrate can form a decorative coating film with continuous adhesion,

Generally, there is no dirt on the surface after a ceramic material is burned and the coating can be directly coated thereon, unless it is contaminated by certain materials such as oil pollution. Unlike steel materials, the ceramic material is not easily corroded by oxidation, and therefore the coating film requires no protecting capability, and the coating film formed by one-time coating the surface of the ceramic material with coating has a decorative effect. The coating method can employ any existing method, comprising but not limited to: spraying coating, brushing coating, rubbing, knife-coating, screen printing, dipping, curtain coating, roller coating and conveyer type coating. A coating method is selected according to design requirements for composite products and characteristics of the coating. An appropriate coating method helps to improve coating efficiency and coating property, to reduce consumption of materials and energy, and to decrease emission of harmful materials. The above-mentioned coating method such as spraying coating coats coating on partial surface or entire surface of the substrate. If the synthetic ceramic tile requires the optimum film appearance, one type of coating film called "advanced decorative coat" can be used. This kind of coating film comprises primer, an intermediate coat and multiple finishes. Every time coating is performed, the coating contains the aluminum pigment or the titanium-mica pearlescent pigment. However, the aluminum pigment and the titanium-mica pearlescent pigment are expensive in comparison with other pigments such as welding pigments, black pigments and white pigments. Therefore, the firstly coated pigment can only be paste coating containing a large amount of welding pigments, which helps to reduce overall cost of the coating film.

In some applications of ceramic substrates, if the ceramic tile has a glaze surface and metallic finish or pearl finish is directly coated thereon, a problem that adhesion is not enough may occur. To solve the problem, primer containing an appropriate silane coupling agent is coated thereon before the metallic finish or the pearl finish is used, and then an intermediate coat or a surface coat is coated whereby forming a chemical bonding between the coating film and the glaze surface, or a silane coupling agent containing alkoxyl and r-aminopropyl active groups are added to the metallic finish or the pearl finish and then one-time coating is performed whereby obtaining a decorative coating film with enough adhesion. As coating is coated on a ceramic tile with a water absorption rate over 10% and/or a course surface, glossiness of the coating film is easily reduced or patterns may be formed on the coating film, unless the low-glossiness coating film or the coating film with patterns is required during design. In this case the primer needs to be coated firstly, and then metallic finish or titanium-mica pearlescent finish is coated whereby obtaining a coating film with flat and smooth appearance and glossiness or high glossiness, and without scratching.

One color design makes use of low hiding power of the titanium-mica pearlescent finish, firstly white, black, red, blue, yellow, green and gray varnish are used to cover background of the ceramic substrate, and then top finish containing pearlescent pigments is coated so that colors of the priming coat are presented via the pearlescent coat whereby facilitating optical characteristics of a background contrast effect of the pearlescent pigments. Another color design makes use of reflection properties of the aluminum pigment and the titanium-mica pearlescent pigment, firstly coating containing the aluminum pigment and the titanium-mica pearlescent pigment is used as the primer, and then colored varnish containing no aluminum pigment and titanium-mica pearlescent pigment but transparent pigments is used as the top finish so that arrays permeate the top coat and are reflected by the priming coat whereby obtaining coating colors with high lightness and saturation. If design of the synthetic ceramic tile requires the coat has a high fullness and different types of coating such as coating with high solid content and low viscosity still cannot meet the requirement, multiple coatings are needed. A coat that is firstly coated contains more pigments than a coat that is subsequently coated, or even the coat that is subsequently coated contains no pigment. No matter what kind of coat is employed by the coating film, namely no matter one layer, two layers or multiple layers are coated on the surface of the ceramic tile, no matter whether pigments of each coat are the same or different, and no matter the aluminum pigment and the titanium-mica pearlescent pigment is disposed on a priming coat, an intermediate coat or a surface coat, they should always be observed or capable of affecting colors of the coating film after the coating film is dried.

Liquid coating coated on the surface of the substrate forms a liquid coating film. A process of transferring from a liquid coating film to a solid coating film is referred to as drying. The process comprises: a process of naturally drying the coat in the normal temperature air, a process of drying the coat by heating, and a process of condensing or polymerizing the coat by applying power or via chemical methods. People skilled in the coating field know that a method of drying the coating film (namely a condition of drying the coating film) depends on production efficiency and power consumption, but the condition of drying the coating film relies on varieties and properties of resins (polymers) in the coating film.

For metallic finish or pearl finish using thermoplastic resins as substrates, a solid coating film can be formed by natural volatilization of solvents therein in a normal temperature (namely air drying). To improve production speed or to help the coating to have a contracting velocity as dying of the coating film is quickened, which is beneficial for positioning and arrangement of the metallic pigment or the pearlescent pigment, volatilization of solvents or dispersion medium can be quickened in a comparatively high temperature (such as 60°C) whereby drying the coating film into a solid coating film, and thermoplastic acrylic finish is a typical example that is dried by volatilization of solvents.

For metallic finish or pearl finish using thermosetting resins as substrates, it is normally dried with external energy such as heating, radiation and so on. The process comprises: volatilization of solvents, chemical reactions such as polycondensation reactions, hydrogen transfer polymerization and so on begin at the end of the volatilization process until a solid coating film is formed. Amino- polyester coating, acrylic-amino coating and organosilicon coating are typical examples that require the above-mentioned drying condition. Drying of coating films of certain thermoset coating, such as metallic finish or pearl finish using fluororesins and polyisocyanate resins containing hydroxyl as substrates, can be conducted in a normal temperature (10°C - 30°C), and isocyanate-group is contacted with hydroxyl to form a solid coating film as the solvents volatilize. Metallic finish or pearl finish containing natural resins comprising drying oil, phenolic resins or alkyd resins is oxidized and polymerized into a solid coating film under action of oxygen in the air as solvents volatilize in a normal temperature. Of course, the metallic finish or the pearl finish can be dried by increasing a temperature.

A metallic color or a pearly luster of powdery coating made by the aluminum pigment and the titanium-mica pearlescent pigment is worse than that of liquid coating. However, as powdery coating containing the aluminum pigment and the titanium-mica pearlescent pigment is coated on the ceramic substrate, various patterns are formed, and the liquid coating cannot facilitate this. This feature is beneficial for pattern design of the synthetic ceramic tile, and has advantages of saving resources and energy, low emission and high production efficiency. Therefore, the powdery coating containing the aluminum pigment and the titanium-mica pearlescent pigment is an important type of coating disclosed by the invention. The aluminum pigment and the titanium-mica pearlescent pigment can be applied to thermoplastic powder coating, and advantageously, thermosetting powder coating. The thermoplastic powder coating containing the aluminum pigment and the titanium-mica pearlescent pigment is coated via hot melt methods such as a fluidized bed technology, and a solid coating film can be obtained by heating powdery coating particles deposited on the surface of the substrate so that they are melted into continuous coats and cooling them (namely melt quench). For thermosetting powder coating containing the aluminum pigment and the titanium-mica pearlescent pigment, a solid coating film is formed by heating the powdery coating so that it is melted and increasing the temperature so that the coat is condensed or polymerized (namely melt-curing).

For multiple-layered coats that are multiple-coated, although coating on different layers is different, they can be simultaneously dried and cured. For example, amino colored varnish is used as priming finish, and acrylic pearlescent finish is used as top finish. However, due to some reasons, for example, a coat that is firstly coated requires a higher temperature than a coat that is subsequently coated, the coat that is firstly coated is to be dried earlier than the coat that is subsequently coated, until a design requirement of the synthetic ceramic tile is met. In large-scale applications, drying the coats one by one does not always reduce production efficiency.

It should be understood that the following embodiments only explain possibility of the synthetic ceramic tile and availability of the method for producing the synthetic ceramic tile, and are not to constitute limitation to the invention. Solidity of combination of the coating film and the ceramic tile complies with the China national standard GB/T9286-1998 Paints and varnishes - Cross-cut test for films: Cross cut, attaching an adhesive tape to the cross-cut, detaching the adhesive tape at an angle of 180° with respect to a sample, and the results obtained are graded.

The following materials are used for embodiments:
floating aluminum paste 101, made in China
non-floating aluminum powder PCR214, ECKART
titanium-mica pearlescent pigment Iriodin 100, MERCK.
titanium-mica pearlescent pigment Iriodin 524, MERCK.
alkyd resin 343-3, Shanghai Xinhua Resin Factory
alkyd resin 344-2, Shanghai Xinhua Resin Factory
amino resin 582-2, Shanghai Xinhua Resin Factory
acrylic resin 4191, thermoplastic, Shanghai Xinhua Resin Factory
acrylic resin 4408, thermosetting, Shanghai Xinhua Resin Factory
polyester resin 300, Shanghai Xinhua Resin Factory
metal-spark powdery coating comprising aluminum powder, thermosetting, Foshan Shunde Blue Sky Industrial Co., Ltd
silicone resin 805, DOW CORNING.
fluor resin JF-2, Changshu 3f Zhonghao New Chemical Material Co., Ltd.
biuret polyisocyanate N75, BAYER.
titanium dioxide, BA01-03 superior product, made in China
carbon black MA-100, Japan Mitsubishi
transparent pigment, phthalocyanine blue 4GN, β- stable type, made in China
talc powder, 1.4-19 mm, made in China
auxiliary agent, defoaming agent, 1% silicon xylene solution, self-made
auxiliary agent, silane coupling age, amino silane 1121, Taiwan DEUCHEM Co., Ltd.
butyl acetate resin, industrial grade
butanol, industrial grade
toluene, industrial grade
xylene, industrial grade
ceramic tile a, dry-press ceramic tile, stone tile, GB/T4100.4-1999, without glaze, Guangdong Foshan Ceramic Group
ceramic tile b, dry-press ceramic tile, ceramic tile, GB/T4100.5-1999, white glaze, Guangdong Foshan Ceramic Group
BOPP carton sealing tape, release force ≥ 6N/25 mm, Guangzhou Jintai Special Adhesive Tape Factory

Embodiment 1

| 1. Preparation of coating: | material | weight account |
|---|---|---|
| | 101 aluminum paste | 7 |
| | 343-3 resin | 69.9 |
| | xylene | 23 |
| | defoaming agent | 0.1 |
| 2. Selection of substrates: ceramic tile a | | |
| 3. Coating method: one-time brush-coating | | |
| 4. Drying condition and method: normal temperature and 7 days, solvents volatilize, is oxidized and polymerized. | | |

A synthetic ceramic tile having a ceramic tile 1 coated with a film layer 2 can be obtained (as shown in FIG. 1), the film layer having smooth and flat appearance and presenting a silver white and metallic color. After a cross-cut test, adhesion of the film is the first class.

Embodiment 2

| 1. Preparation of coating: | material | weight account |
|---|---|---|
| | 4191 resin | 68.9 |
| | PCR214aluminum powder | 8 |
| | butanol | 5 |
| | xylene | 5 |
| | toluene | 13 |
| | defoaming agent | 0.1 |
| 2. Selection of substrates: ceramic tile a | | |
| 3. Coating method: one-time air spray coating | | |
| 4. Drying condition and method: 60°C ± 2°C, 20 minutes, solvents volatilize. | | |

A synthetic ceramic tile having a ceramic tile 1 coated with a film layer 2 can be obtained (as shown in FIG. 1), the film layer having smooth and flat appearance and presenting a silver white and metallic color. After a cross-cut test, adhesion of the film is the first class.

Embodiment 3
1. Selection of coating: metal-spark powdery coating
2. Selection of substrates: ceramic tile a
3. Coating method: spraying coating
4. Melt-curing method: a first 10 minutes and 170°C ± 10°C, a second 10 minutes and 200°C ± 10°C, condensation or polymerization reaction of the coat occurs after continuous films are formed by melting.

A synthetic ceramic tile having a ceramic tile 1 coated with a film or a film layer 2 can be obtained, the film presenting a silver white and metal-spark color, and the film layer 2 having metallic color patterns. After a cross-cut test, adhesion of the film is the zero class.

Embodiment 4

| 1. Preparation of coating: | material | weight account |
|---|---|---|
| | Iriodin100 | 10.8 |
| | 344-2 resin | 54 |
| | 582-2 resin | 20 |
| | 1121 | 1.2 |
| | xylene | 14 |
| 2. Selection of substrates: ceramic tile b | | |
| 3. Coating method: one-time air spraying coating | | |
| 4. Drying condition and method: 120°C ± 2°C and 30 minutes, condensation reaction occurs at the end of volatilization of solvents | | |

A synthetic ceramic tile having a ceramic tile 1 coated with a film layer 2 can be obtained, the film layer having smooth and flat appearance and presenting a silver white and pearl color. After a cross-cut test, adhesion of the film is the first class.

Embodiment 5

| 1. Preparation of coating: | material | weight account |
|---|---|---|
| | 300 resin | 49 |
| | 582-2 resin | 20 |
| | Iriodin 100 | 6 |
| | PCR214 aluminum powder | 3 |
| | xylene | 15 |
| | butanol | 7 |
| 2. Selection of substrates: ceramic tile a | | |
| 3. Coating method: one-time air spraying coating | | |
| 4. Drying condition and method: 180°C ±2°C, 10 minutes, condensation reaction occurs at the end of volatilization of solvents. | | |

A synthetic ceramic tile having a ceramic tile 1 coated with a film layer 2 can be obtained, the film layer having smooth and flat appearance and presenting a silver white and pearl color. After a cross-cut test, adhesion of the film is the zero class.

Embodiment 6

| 1. Preparation of coating a: | material | weight account |
|---|---|---|
| | 4408 resin | 35 |
| | talcum powder | 30 |
| | titanium dioxide | 10 |
| | MA-100 | 1 |
| | butyl acetate resin | 7 |
| | xylene | 7 |
| | N75 | 10 |

| 2. Preparation of coating b: | material | weight account |
|---|---|---|
| | 4408 resin | 53 |
| | PCR214 | 5 |
| | titanium dioxide | 1.5 |
| | butyl acetate resin | 10 |
| | xylene | 10 |
| | N75 | 20 |
| 3. Selection of substrates: ceramic tile a | | |
| 4. Coating method: 1. One-time coating via roller coating a; 2. two-time coating via air spraying coating b | | |
| 5. Drying condition and method: normal temperature, 48 hours, a great deal of hydrogen transfer polymerization and small amount of other reactions occur as solvents volatilize. | | |

A synthetic ceramic tile having a ceramic tile 1 coated with a film layer 2 can be obtained, the film layer having smooth and flat appearance and presenting a gray and metal-spark color. After a cross-cut test, adhesion of the film is the zero class.

Embodiment 7

| 1. Preparation of coating a: | material | weight account |
|---|---|---|
| | 4408 resin | 35 |
| | titanium dioxide | 11 |
| | talcum powder | 20 |
| | butyl acetate resin | 7 |
| | xylene | 7 |
| | N75 | 10 |

| 2. Preparation of coating b: | material | weight account |
|---|---|---|
| | JF-2 resin | 59 |
| | Iriodin 524 | 11 |
| | butyl acetate resin | 5 |
| | xylene | 5 |
| | toluene | 10 |
| | N75 | 10 |

| 3. Preparation of coating c: | material | weight account |
|---|---|---|
| | JF-2 resin | 70 |
| | butyl acetate resin | 10 |
| | xylene | 10 |
| | N75 | 10 |
| 4. Selection of substrates: ceramic tile a | | |
| 5. Coating method: 1. One-time coating primer- coating a via roller coating; 2 one-time processing coating b via air spraying coating; 3. one-time processing coating c via air spraying coating | | |
| 6. Drying condition and reaction forms: normal temperature, 48 hours, a great deal of hydrogen transfer polymerization and small amount of other reactions occur as solvents volatilize. A synthetic ceramic tile having a ceramic tile 1 coated with a film layer 2, the film layer having smooth and flat appearance and presenting a gray and metal-spark color. After a cross-cut test, adhesion of the film is the zero class. | | |

A synthetic ceramic tile having a ceramic tile 1 coated with a film layer 2 can be obtained, the film layer having smooth and flat appearance and presenting a spark, bronze and pearl color, and comprising a priming coat, an intermediate coat having a pearlescent pigment, and a varnish top coat. After a cross-cut test, adhesion of the film is the zero class.

Embodiment 8

| 1. Preparation of coating a: | material | weight account |
|---|---|---|
| | 805 resin | 70 |
| | talcum powder | 20 |
| | xylene | 10 |

| 2. Preparation of coating b: | material | weight account |
|---|---|---|
| | 805 resin | 82 |
| | PCR214aluminum powder | 8 |
| | xylene | 10 |
| 3. Selection of substrates: ceramic tile a | | |
| 4. Coating method: 1. One-time coating primer- coating a via roller coating; 2 one-time processing coating b via air spraying coating | | |
| 5. Drying condition and method: 220°C ± 2°C, 30 minutes, hydrogen transfer polymerization | | |

A synthetic ceramic tile having a ceramic tile 1 coated with a film layer 2 can be obtained, the film layer having smooth and flat appearance and presenting a silver-white and metal-spark color. After a cross-cut test, adhesion of the film is the zero class.

Embodiment 9

| 1. Preparation of coating a: | material | weight account |
|---|---|---|
| | 805 resin | 81 |
| | Iriodin100 | 9 |
| | xylene | 10 |
| 2. Selection of substrates: ceramic tile a | | |
| 3. Coating method: one-time spraying coating | | |
| 4. Drying condition and method: 220°C ± 2°C, 30 minutes, hydrogen transfer polymerization | | |

A synthetic ceramic tile having a ceramic tile 1 coated with a film layer 2 can be obtained, the film layer having smooth and flat appearance and presenting a silver-white and pearl color. After a cross-cut test, adhesion of the film is the zero class.

Embodiment 10

| 1. Preparation of coating a: | material | weight account |
|---|---|---|
| | 300 resin | 44 |
| | 582-2 resin | 20 |
| | talcum powder | 10 |
| | titanium dioxide | 10 |
| | MA-100 | 1.5 |
| | xylene | 10 |
| | butanol | 5 |

| 2. Preparation of coating b: | Material | weight account |
|---|---|---|
| | 4408 resin | 53 |
| | Iriodin100 | 9 |
| | butyl acetate | 8 |
| | xylene | 10 |
| | N75 | 20 |
| 3. Coating method: 1. One-time processing coating a via spraying coating; 2. One-time processing coating b via spraying coating. | | |
| 4. Selection of substrates: ceramic tile a | | |
| 5. Drying condition and method: 1. One-time coating primer, 180°C ± 2°C, 10 minutes, condensation reaction occurs at the end of volatilization of solvents; 2. One-time coating: normal temperature, 48 hours, a great deal of hydrogen transfer polymerization and small amount of other reactions occur as solvents volatilize. | | |

A synthetic ceramic tile having a ceramic tile 1 coated with a film layer 2 can be obtained, the film layer having smooth and flat appearance and presenting a light gray and pearl color. After a cross-cut test, adhesion of the film is the zero class.

Embodiment 11

| 1. Preparation of coating a: | Material | weight account |
|---|---|---|
| | 300 resin | 44 |
| | 582-2 resin | 20 |
| | Iriodin100 | 11 |
| | xylene | 15 |
| | butanol | 10 |

| 2. Preparation of coating b: | Material | weight account |
|---|---|---|
| | 4408 resin | 57 |
| | phthalocyanine blue 4GN | 2 |
| | butyl acetate | 8 |
| | xylene | 10 |
| | N75 | 20 |
| 3. Coating method: 1. One-time processing coating a via spraying coating; 2. One-time processing colored varnish - coating b via spraying coating. | | |
| 4. Selection of substrates: ceramic tile a | | |
| 5. Drying condition and method: 1. One-time priming coating: 180°C ± 2°C, 10 minutes, condensation reaction occurs at the end of volatilization of solvents; 2. One-time coating: normal temperature, 48 hours, a great deal of hydrogen transfer polymerization and small amount of other reactions occur as solvents volatilize. | | |

A synthetic ceramic tile having a ceramic tile 1 coated with a film layer 2 can be obtained, the film layer having smooth and flat appearance and presenting a brilliant, blue and pearl color. After a cross-cut test, adhesion of the film is the zero class.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. A synthetic ceramic tile, comprising:
a ceramic tile; and
film layer;
wherein
said film layer is coated on said ceramic tile; and
said film layer contains at least an aluminum pigment and/or at least a titanium-mica pearlescent pigment.

2. The synthetic ceramic tile of claim 1, wherein said ceramic tile is an unglazed tile.

3. The synthetic ceramic tile of claim 2, wherein said ceramic tile is an unglazed stone tile.

4. The synthetic ceramic tile of claim 1-3, wherein said film layer comprises a priming coat, an intermediate coat, and a top coat, wherein said priming coat does not contain said aluminum pigment and said titanium-mica pearlescent pigment, and said intermediate coat contains said aluminum pigment and/or said titanium-mica pearlescent pigment and said top coat contains colored varnish and/or varnish.

5. The synthetic ceramic tile of claim 1, wherein a metal colored pattern is disposed on the surface of said film layer.

6. A method for producing a synthetic ceramic tile of claim 1, comprising steps of:
(1) selecting a ceramic tile;
(2) coating a coating on said ceramic tile, said film layer containing at least an aluminum pigment and/or at least a titanium-mica pearlescent pigment; and
(3) drying a liquid coating deposited on said ceramic tile.

7. The method of claim 6, further comprising coating primer that does not contain an aluminum pigment and a titanium-mica pearlescent pigment on the surface of said ceramic tile before coating a coating on said ceramic tile.

8. The method of claim 6 or claim 7, further comprising coating colored varnish and/or varnish on said ceramic tile after coating a coating on said ceramic tile.

9. The method of claim 6, wherein said aluminum pigment and/or said titanium-mica pearlescent pigment account for 0.7 - 60% of said coating by weight.

10. The method of claim 6 or claim 7, wherein said aluminum pigment is non-floating aluminum powder.
